# EUROPEAN PATENT SPECIFICATION

(11) **EP 4 349 191 B1**
(45) Date of publication and mention of the grant of the patent: **23.09.2026**
(21) Application number: 21951631.7
(22) Date of filing: 11.11.2021
(51) Int. Cl.: A24F 40/10, A24F 40/42, A24F 40/46, A24F 40/70, C03C 3/083, C03C 8/18, C04B 38/00, C04B 41/00, C04B 41/51, C04B 41/86, C04B 41/88, H05B 3/42

(54) **ELECTRONIC CIGARETTE ATOMIZATION CORE, PREPARATION METHOD FOR ELECTRONIC CIGARETTE ATOMIZATION CORE, ELECTRONIC CIGARETTE ATOMIZATION ASSEMBLY, AND ELECTRONIC CIGARETTE**
ZERSTÄUBUNGSKERN EINER ELEKTRONISCHEN ZIGARETTE, HERSTELLUNGSVERFAHREN FÜR ZERSTÄUBUNGSKERN EINER ELEKTRONISCHEN ZIGARETTE, ZERSTÄUBUNGSANORDNUNG EINER ELEKTRONISCHEN ZIGARETTE UND ELEKTRONISCHE ZIGARETTE
NOYAU D'ATOMISATION DE CIGARETTE ÉLECTRONIQUE, PROCÉDÉ DE PRÉPARATION POUR NOYAU D'ATOMISATION DE CIGARETTE ÉLECTRONIQUE, ENSEMBLE D'ATOMISATION DE CIGARETTE ÉLECTRONIQUE, ET CIGARETTE ÉLECTRONIQUE

(30) Priority: 26.07.2021 CN 202110846774; 19.08.2021 CN 202110957244
(43) Date of publication of application: 10.04.2024
(73) Proprietor: BYD Precision Manufacture Co., Ltd., Shenzhen Guangdong 518116 (CN)
(72) Inventor: JIANG, Pinyi, Shenzhen Guangdong 518116 (CN); XU, Shurong, Shenzhen Guangdong 518116 (CN); YANG, Weiqiang, Shenzhen Guangdong 518116 (CN); WU, Xuetong, Shenzhen Guangdong 518116 (CN)
(74) Representative: Michalski Hüttermann & Partner mbB
(86) International application number: PCT/CN2021/130136
(87) International publication number: WO 2023/005059

(56) References cited:
- WO-A1-2021/143328
- WO-A1-2021/143328
- CN-A- 111 000 293
- CN-A- 111 000 293
- CN-A- 111 728 273
- CN-A- 111 728 273
- CN-A- 112 790 427
- CN-A- 112 888 093
- CN-A- 112 888 093
- CN-U- 212 911 666
- CN-U- 212 911 666

## Description

### CROSS-REFERENCE TO RELATED APPLICATIONS

The present disclosure claims priorities to Chinese Patent Application No. 202110957244.9, entitled "ELECTRONIC CIGARETTE ATOMIZATION CORE, ELECTRONIC CIGARETTE ATOMIZATION ASSEMBLY, AND ELECTRONIC CIGARETTE" and filed on August 19, 2021, and Chinese Patent Application No. 202110846774.6, entitled "HEATING BODY COMPOSITION, PREPARATION METHOD FOR HEATING BODY, HEATING BODY, ELECTRONIC CIGARETTE ATOMIZATION CORE, AND ELECTRONIC CIGARETTE" and filed on July 26, 2021.

### FIELD

The present disclosure belongs to the technical field of electronic cigarette products, and specifically, to an electronic cigarette atomization core, an electronic cigarette atomization assembly, and an electronic cigarette.

### BACKGROUND

An atomization core is an important component in an electronic atomization device and mainly includes a porous ceramic base body and a porous heating body arranged on a surface of the porous ceramic base body, where the porous ceramic base body is in communication with a liquid storage cavity configured to store atomization liquid and may transfer the atomization liquid to the porous heating body, and the atomization liquid is atomized after being heated by the porous heating body.

However, during an inhalation process of existing ceramic atomization core electronic cigarettes on the market by a user, a burnt flavor is likely to occur, which seriously affects user experience. CN112888093A provides a heating assembly including a porous ceramic substrate configured to guide a to-be-vaporized substrate and a heating layer configured to heat to vaporize the to-be-vaporized substrate. CN111000293 A relates to an electronic cigarette atomizing core and its preparation method. WO2021143328A1 relates to a method for manufacturing a heating element, the plurality of through holes with capillary acting force are formed in the photosensitive glass substrate, so that the porosity of the formed heating element can be accurately controlled.

### SUMMARY

An objective of embodiments of the present disclosure is to provide new technical solutions of an electronic cigarette atomization core, an electronic cigarette atomization assembly, and an electronic cigarette.

According to a first aspect of the present disclosure, an electronic cigarette atomization core preparation method is provided. The preparation method includes:
(1) providing a porous ceramic base body;
(2) mixing conductive powder and glass powder having a volume ratio of (28 to 60):(40 to 72) with an organic solvent to obtain a slurry; and
(3) arranging the slurry on a surface of the porous ceramic base body to perform sintering, where the sintering is performed under a hydrogen and/or nitrogen protection atmosphere or under a vacuum condition in which a vacuum degree is less than 1 Pa, and a sintering temperature ranges from 950°C to 1200°C.

The sintering is performed under a mixed hydrogen and nitrogen atmosphere, and the sintering temperature ranges from 1030°C to 1200°C.

The glass powder includes 4% to 15% of Na₂O, 0% to 2% of MgO, 2% to 15% of Al₂O₃, 0% to 7% of K₂O, 0% to 15% of CaO, and 20% to 90% SiO₂; the conductive powder includes one or more of a nickel-chromium-iron alloy, a nickel-chromium alloy, nickel, silver, and palladium; and the organic solvent includes one or more of terpineol, diethylene glycol monobutyl ether, diethylene glycol monobutyl ether acetate, and DBE.

A ratio of a mass sum of the conductive powder and the glass powder to a mass of the organic solvent is (40 to 90):(10 to 60).

The slurry is arranged on the surface of the porous ceramic base body in a printing or coating manner, and the printing includes screen printing or stencil printing.

According to a second aspect of the present disclosure, an electronic cigarette atomization core is provided. The electronic cigarette atomization core is prepared by using the preparation method described in the foregoing embodiment. The electronic cigarette atomization core includes the porous ceramic base body and a heating body formed by the sintered slurry, the porous ceramic base body includes a liquid absorbing surface and an atomization surface, the heating body is arranged on the atomization surface, the heating body is a porous heating body, and the porous heating body has a porosity less than or equal to 30%.
Optionally, the porosity of the porous heating body is less than or equal to 10%.
Optionally, the porosity of the porous heating body is less than or equal to 3%.
Optionally, the porous heating body has a pore size less than or equal to 10 µm.
Optionally, the pore size of the porous heating body is less than or equal to 2 µm.
Optionally, the porous heating body is arranged on the atomization surface in a printing or coating manner, and the printing includes screen printing or stencil printing.
Optionally, the porous heating body has a thickness ranging from 40 µm to 200 µm.

According to a third aspect of the present disclosure, an electronic cigarette atomization assembly is provided. The electronic cigarette atomization assembly includes: a housing, a liquid storage tank arranged in the housing, the electronic cigarette atomization core described in the foregoing embodiment, and a lower cover. One end of the housing is provided with an air outlet channel, and the other end of the housing is an opening end. The lower cover covers the opening end of the housing, and the lower cover is provided with an air inlet channel. The liquid absorbing surface is in communication with the liquid storage tank, an atomization chamber is formed between the atomization surface and a lower base, and the air inlet channel, the atomization chamber, and the air outlet channel are in air communication with each other.

Optionally, the electronic cigarette atomization assembly further includes a first seal element, the first seal element is sleeved on the porous ceramic base body, and the first seal element at least covers a part of an outer peripheral surface of the porous ceramic base body and an edge of the liquid absorbing surface to form a seal.

The electronic cigarette atomization assembly further includes: an upper support and a second seal element. The upper support cooperates with the lower cover to form an accommodating cavity, the electronic cigarette atomization core is located in the accommodating cavity and the electronic cigarette atomization core is supported on the lower cover, the upper support is provided with a liquid guide hole and an air outlet hole, the liquid absorbing surface of the porous ceramic base body is in communication with the liquid storage tank through the liquid guide hole, and the atomization chamber is in communication with the air outlet channel through the air outlet hole. The second seal element is sleeved on a periphery of the upper support, an outer edge of the second seal element abuts against an inner wall of the housing to encircle and form the liquid storage tank, the second seal element is provided with a first communication hole communicating the liquid storage tank with the liquid guide hole, and the second seal element is provided with a second communication hole communicating the air outlet channel with the air outlet hole.

Optionally, the electronic cigarette atomization assembly further includes a lower support. The upper support cooperates with the lower support to form the accommodating cavity, the electronic cigarette atomization core is arranged in the accommodating cavity and the electronic cigarette atomization core is supported on the lower support, and the liquid absorbing surface of the porous ceramic base body is in communication with the liquid storage tank through the liquid guide hole; and the atomization chamber is formed between the atomization surface of the porous ceramic base body and the lower support, and the lower support is provided with a vent hole in communication with an air inlet hole.

Optionally, the electronic cigarette atomization assembly further includes a third seal element, where the third seal element is arranged surrounding a periphery of the lower cover, and an outer edge of the third seal element abuts against the inner wall of the housing.

According to a fourth aspect of the present disclosure, an electronic cigarette is provided, including the electronic cigarette atomization assembly described in the foregoing embodiment.

The inventor of the present disclosure found in research that, for existing electronic cigarettes on the market, a heating body of a ceramic atomization core may absorb some e-liquid, and a heating temperature of the porous heating body during operation is high, so that the e-liquid entering a gap of the porous heating body is cracked, and vapor thereof has a burnt flavor. As a result, the use efficiency of the e-liquid and use experience of a user are reduced, and carbon deposition may occur in the porous heating body due to the cracked e-liquid, leading to a decrease in a service life of the atomization core.

The inventor of the present disclosure found in an experimental process that, vapor formed through heating by using a conventional porous heating body has a burnt flavor, a taste of the vapor is poor, and the heating body may be easily burnt out. The inventor of the present disclosure unconsciously found in experiments that, by adjusting a component proportion and a sintering process of the heating body to control a porosity of the heating body to be less than or equal to 30%, the situations that the vapor has a burnt flavor and the heating body is easily burnt out may be greatly alleviated. The inventor found through deep analysis that, in the related art, occurrence of this situation lies in that, in the related art, to increase a vapor amount, the porosity of the heating body is generally controlled to be large, in a process that the e-liquid is transferred to the atomization surface of the ceramic base body and heated, a part of e-liquid may be left in a pore of the heating body, and in a process that the heating body heats and atomizes the e-liquid, the part of e-liquid left in the pore may be cracked, and substances generated by cracking may be mixed into the vapor and inhaled by the user, so that the vapor has a burnt flavor. On the other hand, the inventor further found that, some carbon may be generated due to cracking, and deposition of the carbon may block the pore of the porous ceramic base body. As a result, transferring of the e-liquid is affected, and the heating body is broken due to dry heating.

In the present disclosure, for the situations that the vapor has a burnt flavor and the heating body is easily broken in the related art, an electronic cigarette atomization core is provided. The electronic cigarette atomization core mainly includes a porous ceramic base body and a heating body, and the heating body is a porous heating body. By controlling a porosity of the porous heating body to be less than or equal to 30%, the electronic cigarette atomization core in the present disclosure is applied to an electronic cigarette, so that during inhalation by the user, the atomization satiation of the e-liquid and the taste restoration of inhalation are high.

Through detailed description of exemplary embodiments of the present disclosure with following reference to the accompanying drawings, other features and advantages of the present disclosure will become clear.

### BRIEF DESCRIPTION OF THE DRAWINGS

The accompanying drawings incorporated in the specification as a part of the specification show embodiments of the present disclosure, and together with description thereof are used to explain the principle of the present disclosure.
FIG. 1 is a cross-sectional view of a porous heating body in an electronic cigarette atomization core according to an embodiment of the present disclosure;
FIG. 2 is a schematic structural diagram of an electronic cigarette atomization core according to an embodiment of the present disclosure;
FIG. 3 is a top view of an electronic cigarette atomization core according to an embodiment of the present disclosure;
FIG. 4 is a side view of an electronic cigarette atomization core according to an embodiment of the present disclosure;
FIG. 5 is another side view of an electronic cigarette atomization core according to an embodiment of the present disclosure;
FIG. 6 is an exploded view of an electronic cigarette atomization assembly according to an embodiment of the present disclosure;
FIG. 7 is a cross-sectional view of an electronic cigarette atomization assembly according to an embodiment of the present disclosure; and
FIG. 8 is a block diagram of a process of a preparation method for an electronic cigarette atomization core according to an embodiment of the present disclosure.

In the accompanying drawings:
1-Porous heating body; 11-Pore; 12-Electrode; 2-Porous ceramic base body;
100-Electronic cigarette atomization core; 101-Housing; 1011-Air outlet channel; 102-Liquid storage tank; 103-Upper support; 1031-Air outlet hole; 1032-Liquid guide hole; 104-Lower support; 105-Lower cover; 1051-Air inlet hole; 106-atomization chamber; 107-Second seal element; 1071-First communication hole; 1072-Second communication hole; 108-First seal element; 109-Third seal element; and 1010-Liquid absorbing element.

### DETAILED DESCRIPTION

Various exemplary embodiments of the present disclosure are described below in detail with reference to the accompanying drawings. It should be noted that, unless otherwise specifically specified, arrangement, numeric expressions, and values of components and steps described in the embodiments are not intended to limit the scope of the present disclosure.

The following description of at least one exemplary embodiment is merely illustrative and should not be understood as any limitation on the present disclosure and application or use thereof.

Technologies, methods, and devices that are known to a person of ordinary skill in the art are not discussed in detail.

In all examples that are shown and discussed in the specification, any specific value should be construed as exemplary rather than limitative. Therefore, other examples of the exemplary embodiment may have different values.

It should be noted that: similar reference numerals or letters in the accompanying drawings indicate similar items. Therefore, once an item is defined in one accompanying drawing, the item does not need to be further discussed in the subsequent accompanying drawings.

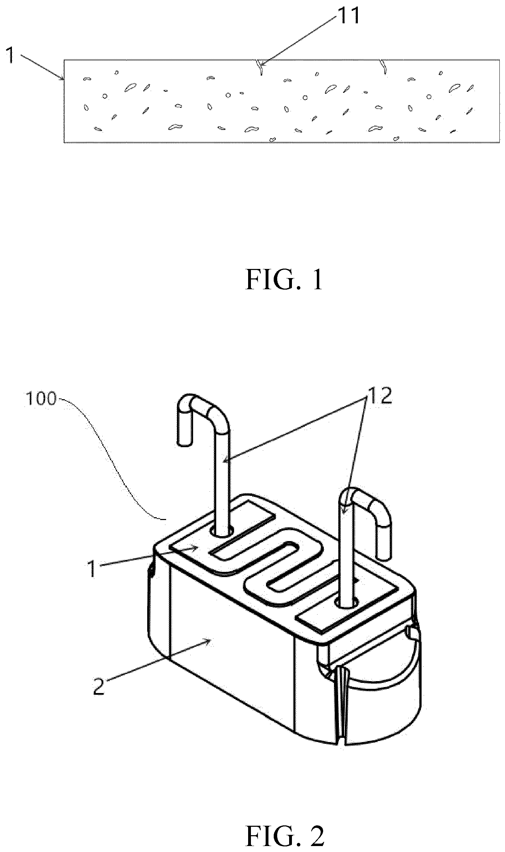

Referring to FIG. 1 to FIG. 5, an embodiment of the present disclosure provides an electronic cigarette atomization core. The electronic cigarette atomization core 100 includes a heating body and a porous ceramic base body 2, where the porous ceramic base body 2 includes a liquid absorbing surface and an atomization surface, and the heating body is arranged on the atomization surface. The heating body is a porous heating body 1, and a porosity of the porous heating body 1 is less than or equal to 30%.

In some embodiments, the porous heating body 1 may include a conductive skeleton and a glass body embedded in the conductive skeleton, and the porous heating body 1 has pores 11, so that the porous heating body 1 has a specific porosity. The conductive skeleton may be a conductive skeleton formed by accumulation of conductive powder, and the glass body may be glass powder. As shown in FIG. 1, in a forming process of the porous heating body 1, high-temperature roasting needs to be performed, so that the conductive powder is in contact with each other and densely accumulated under a capillary wetting action of high-temperature melting of the glass powder, and the molten glass powder may be filled in the pores accumulated by the conductive powder. Therefore, a density of the porous heating body 1 is improved, and the porosity of the porous heating body 1 is less than or equal to 30%.

In a case that the porous heating body 1 has a relatively high density, e-liquid on the atomization surface in the electronic cigarette atomization core 100 may not penetrate into the pores 11 of the porous heating body 1. In this way, cracking on the e-liquid by the porous heating body 1 in a heating state is avoided, and carbon deposition may not easily occur on the porous heating body 1. Therefore, when a user inhales an electronic cigarette, the e-liquid may be kept at a suitable atomization temperature, so that the atomization satiation of the e-liquid and the taste restoration of inhalation are improved. In addition, the pores 11 are in communication with the outside, so that the porosity of the porous heating body 1 may be obtained through testing methods such as a water displacement method or physical absorption.

The electronic cigarette atomization core 100 provided in this embodiment of the present disclosure includes a porous heating body 1 and a porous ceramic base body 2, where the porous ceramic base body 2 includes a liquid absorbing surface and an atomization surface, and the porous heating body 1 is arranged on the atomization surface through screen printing. A component of the porous heating body 1 is controlled, so that the porosity of the porous heating body 1 is less than or equal to 30%. Therefore, the density of the porous heating body 1 is improved, and a case that the e-liquid in the electronic cigarette atomization core 100 penetrates into the porous heating body 1 and is cracked by the porous heating body is avoided. In addition, when a user inhales an electronic cigarette, the e-liquid may be kept at a suitable atomization temperature, so that the atomization satiation of the e-liquid and the taste restoration of inhalation are improved.

In some implementations, the porosity of the porous heating body 1 is less than or equal to 10%. Optionally, the porosity of the porous heating body 1 is less than or equal to 3%. The inventor of the present disclosure found in an experimental process that, when the porosity of the porous heating body 1 is less than or equal to the foregoing value, a vapor taste is optimal.

In some embodiments, when the porosity of the porous heating body 1 is less than or equal to a specific value, the porous heating body 1 has a good density, so that the e-liquid in the electronic cigarette atomization core 100 can be prevented from penetrating into the porous heating body 1, and a vapor amount is not affected. In the present disclosure, the component of the porous heating body 1 may be controlled, and a high-temperature roasting parameter in the shaping process of the porous heating body 1 may be flexibly controlled, to control the porosity of the porous heating body 1 to range from 10% to 30%, or to be less than or equal to 10%, or to be less than or equal to 3%.

In the present disclosure, the porosity of the porous heating body 1 may alternatively be controlled to be less than 10%. Therefore, the density of the porous heating body 1 is further improved, and a case that the e-liquid in the electronic cigarette atomization core 100 penetrates into the porous heating body 1 and is cracked by the porous heating body is avoided. In an embodiment of the present disclosure, in the present disclosure, the component of the porous heating body 1 may be controlled, and a high-temperature roasting parameter in the shaping process of the porous heating body 1 may be flexibly controlled, to limit the porosity of the porous heating body 1 within a range not greater than 3%. When the porosity of the porous heating body 1 is limited within the range not greater than 3%, the density of the porous heating body 1 may be more effectively improved, and a case that the e-liquid in the electronic cigarette atomization core 100 penetrates into the porous heating body 1 and is cracked by the porous heating body is avoided. In addition, when a user inhales an electronic cigarette, the e-liquid may be kept at a suitable atomization temperature, so that the atomization satiation of the e-liquid and the taste restoration of inhalation are improved.

In some implementations, referring to FIG. 1, a pore size of the porous heating body 1 is less than or equal to 10 µm.

In some embodiments, the porous heating body 1 may form a pore structure in a high-temperature roasting process, for example, the pores 11 in the porous heating body 1, and the pores 11 are in communication with the outside. To prevent the e-liquid in the electronic cigarette atomization core 100 from penetrating into the pores 11 of the porous heating body 1, a pore size of each pore 11 may be controlled to be less than or equal to 10 µm. For example, an average pore size of the pores 11 ranges from 0.2 µm to 10 µm. A roasting temperature of the porous heating body 1 is closely related to the average pore size of the pores 11. When the roasting temperature of the porous heating body 1 is relatively low, the glass body cannot be fully molten. As a result, embedding of the glass body into the conductive skeleton is blocked, and the average pore size of the pores 11 is excessively great. When the roasting temperature of the porous heating body 1 is relatively high, the glass body is volatile after being molten. As a result, the porosity of the porous heating body 1 is also be improved, and the density of the porous heating body 1 is reduced.

In some implementations, the pore size of the porous heating body 1 is less than or equal to 2 µm, and preferably, the pore size ranges from 0.2 µm to 2 µm.

In some embodiments, a gap of the conductive skeleton of the porous heating body 1 is a gap formed by accumulation of the conductive powder, that is, a particle size of the conductive powder is related to the gap of the conductive skeleton. Further, the gap of the conductive skeleton may be reduced by controlling the particle size of the conductive powder and controlling the high-temperature roasting parameter of the porous heating body 1, and the glass body may be fully filled in the gap of the conductive skeleton in a high-temperature molten state. Therefore, the pore size of each pore 11 is reduced, and the density of the porous heating body 1 is improved.

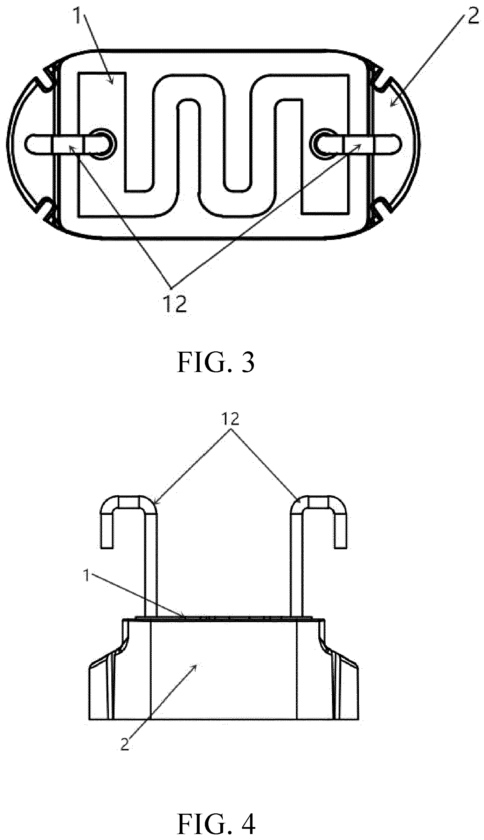

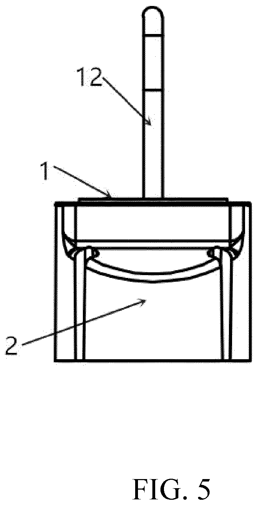

In the present disclosure, the porous heating body 1 is arranged on the atomization surface in a printing or coating manner, and the printing includes screen printing or stencil printing. In some implementations, referring to FIG. 4 and FIG. 5, a thickness of the porous heating body 1 ranges from 40 µm to 200 µm.

In some embodiments, the porous heating body 1 may be arranged on the atomization surface through screen printing, and specifically, the porous heating body 1 in a slurry shape is arranged onto the atomization surface through screen printing or stencil printing and then roasted for shaping. In a case that the thickness of the porous heating body 1 ranges from 40 µm to 200 µm, the size balance and stability of the porous heating body 1 may be improved while the conductivity and electric-heat conversion stability of the porous heating body 1 are ensured. When the thickness of the porous heating body 1 is too small, screen printing or stencil printing of the porous heating body 1 may be non-uniform, and consequently, some positions of the porous heating body 1 may not be conductive, thereby limiting the electric-heat conversion efficiency of the porous heating body 1. When the thickness of the porous heating body 1 is too large, the porous heating body 1 arranged on the atomization surface through screen printing has specific fluidity, the thickness of the porous heating body 1 may be inconsistent when the porous heating body is not roasted in time, and consequently, the size consistency of the porous heating body 1 is reduced.

In some implementations, referring to FIG. 2 and FIG. 3, the electronic cigarette atomization core 100 includes a porous ceramic base body 2 and a heating body, where the heating body is a porous heating body 1, the porous ceramic base body 2 includes a liquid absorbing surface and an atomization surface, and the porous heating body 1 is arranged on the atomization surface of the porous ceramic base body 2.

In the present disclosure, the porous heating body 1 includes at least one first bending section and at least one second bending section, and bending directions of the first bending section and the second bending section are reverse. In this way, a heating rate of the porous heating body 1 may be flexibly controlled, so that the heating balance of the atomization surface is ensured, and an arrangement area of the porous heating body 1 may be simplified, thereby reducing arrangement costs of the porous heating body 1.

In some implementations, as shown in FIG. 3, two ends of the porous heating body 1 are respectively a first connection section and a second connection section. The porous heating body 1 further includes a first heating section, a second heating section, and a third heating section, where the first heating section is connected between the first connection section and the first bending section, the second heating section is respectively connected to the first bending section and the second bending section, and the third heating section is connected between the second bending section and the second connection section. The first connection section and the second connection section respectively extend to two ends of the atomization surface, and the first heating section, the second heating section, and the third heating section provide a main heat source to the porous heating body 1, so that the porous heating body may heat the atomization surface in a balanced manner.

In some implementations, referring to FIG. 2 to FIG. 5, an electrode 12 is arranged on the porous heating body 1, and the electrode 12 is configured to be electrically connected to an external power supply.

In some embodiments, the electrode 12 may include a positive electrode and a negative electrode, and the positive electrode and the negative electrode are respectively connected to two ends of the conductive skeleton of the porous heating body 1. When the porous heating body 1 is applied to an electronic cigarette, a voltage is applied to the positive electrode and the negative electrode by a power supply in the electronic cigarette, so that the porous heating body 1 may be powered. The porous heating body 1 may convert electric energy into heat energy when powered, and the e-liquid at an atomization end of the electronic cigarette atomization core 100 may be atomized when the porous heating body 1 generates heat, thereby ensuring an atomization effect of the electronic cigarette.

In summary, the electronic cigarette atomization core 100 in the present disclosure mainly includes a porous ceramic base body 2 and a heating body, and the heating body is a porous heating body 1. By controlling the porosity of the porous heating body 1 to be less than or equal to 30%, the density of the porous heating body 1 is improved, and a case that the e-liquid in the electronic cigarette atomization core 100 penetrates into the porous heating body 1 and is cracked by the porous heating body is avoided. In addition, when a user inhales an electronic cigarette, the e-liquid may be kept at a suitable atomization temperature, so that the atomization satiation of the e-liquid and the taste restoration of inhalation are improved.

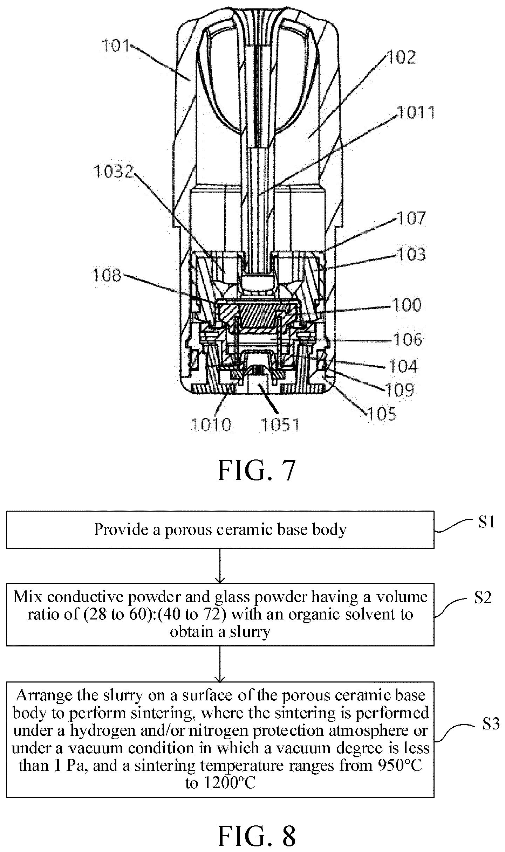

According to a second aspect of the present disclosure, a preparation method of an electronic cigarette atomization core 100 is provided. As shown in FIG. 8, the preparation method includes:
S1. Provide a porous ceramic base body.
S2. Mix conductive powder and glass powder having a volume ratio of (28 to 60):(40 to 72) with an organic solvent to obtain a slurry.
S3. Arrange the slurry on a surface of the porous ceramic base body to perform sintering, where the sintering is performed under a hydrogen and/or nitrogen protection atmosphere or under a vacuum condition in which a vacuum degree is less than 1 Pa, and a sintering temperature ranges from 950°C to 1200°C

In some embodiments, referring to FIG. 8, in the preparation method of the electronic cigarette atomization core 100 in the present disclosure, a porous ceramic base body 2 may be first provided. Conductive powder and glass powder having a volume ratio of (28 to 60):(40 to 72) in a heating body composition are then mixed with an organic solvent to obtain a slurry. A real volume of the conductive powder is a volume occupied by an entity skeleton of the conductive powder. That is, the real volume of the conductive powder is equal to a result of subtracting a pore volume of the conductive powder from an appearance volume of the conductive powder, namely, a product of the appearance volume of the conductive powder and a result of subtracting a porosity thereof from 1. Similarly, a real volume of the glass power is a volume occupied by an entity skeleton of the glass powder. That is, the real volume of the glass powder is equal to a result of subtracting a pore volume of the glass powder from an appearance volume of the glass powder, namely, a product of the appearance volume of the glass powder and a result of subtracting a porosity thereof from 1. By controlling real volume ratios of the conductive powder and the glass powder, a porosity of a porous heating body 1 after the sintering may be effectively controlled, and e-liquid in the electronic cigarette atomization core 100 is prevented from penetrating into the porous heating body 1.

The slurry is finally arranged on a surface of the porous ceramic base body 2 to perform sintering, where the sintering may be performed under a hydrogen and/or nitrogen protection atmosphere or under a vacuum condition in which a vacuum degree is less than 1 Pa, and a sintering temperature ranges from 950°C to 1200°C. After the sintering is completed, the electronic cigarette atomization core 100 is obtained.

That is, the sintering process may specifically be performed in an atmosphere furnace, and metalization and a density of the heating body may be effectively improved by controlling a sintering process parameter in the atmosphere furnace. When the sintering temperature is too low, the viscosity of the glass powder is high when the temperature is low. As a result, the glass powder can be hardly fully filled in a gap of the conductive powder, and the porous heating body 1 cannot be well densified and filled. When the sintering temperature is too high, the glass powder is volatile after being molten under a high temperature. As a result, the porosity of the porous heating body 1 is improved, and the density of the porous heating body is reduced.

In the present disclosure, the sintering is performed under a mixed hydrogen and nitrogen atmosphere, and the sintering temperature ranges from 1030°C to 1200°C. The conductive powder is generally metal powder or metal alloy powder. In a case that the sintering is performed under a high temperature, the conductive powder may easily react with oxygen in a sintering atmosphere to generate a metal oxide, and the conductivity of the porous heating body 1 is reduced. When the sintering temperature is controlled within 1030°C to 1200°C and the sintering is performed under a protection atmosphere condition, for example, the protection atmosphere is hydrogen and/or nitrogen, the hydrogen and the nitrogen do not react with the metal powder, so that the conductive powder may be well protected, and the conductive efficiency of the porous heating body 1 is ensured. In addition, the sintering may alternatively be performed under a vacuum condition, and a vacuum degree is less than or equal to 1 Pa. In a low vacuum state, the conductive powder may also be well protected.

In the present disclosure, the glass powder includes 4% to 15% of Na₂O, 0% to 2% of MgO, 2% to 15% of Al₂O₃, 0% to 7% of K₂O, 0% to 15% of CaO, and 20% to 90% SiO₂. The conductive powder includes one or more of a nickel-chromium-iron alloy, a nickel-chromium alloy, nickel, silver, and palladium. Nickel-chromium-iron alloy powder has a low temperature resistance coefficient, so that when the porous heating body 1 is applied to an electronic cigarette, a heat generation speed of the porous heating body 1 is high when powered, and an atomization response speed during inhalation by a user is improved, thereby bringing a good inhalation experience. The organic solvent includes one or more of terpineol, diethylene glycol monobutyl ether, diethylene glycol monobutyl ether acetate, and DBE (a mixture including three dibasic esters, which is generally referred to as dimethyl nylon acid). A ratio of a mass sum of the conductive powder and the glass powder to a mass of the organic solvent is (40 to 90):(10 to 60).

In the present disclosure, the conductive powder may be used as a conductive skeleton of the electronic cigarette atomization core 100 in the electronic cigarette atomization core 100, and function as a conductive circuit. Under a capillary wetting action of high-temperature melting of the glass powder, the conductive powder may be in contact with each other and densely accumulated, and the molten glass powder may be filled in pores accumulated by the conductive powder. Through effective cooperation of a real volume ratio of the glass powder to the conductive powder, a density of the electronic cigarette atomization core 100 is improved.

The organic solvent may be some organic solvents that have a low boiling point and are volatile under normal temperature and pressure, for example, one or more of terpineol, diethylene glycol monobutyl ether, diethylene glycol monobutyl ether acetate, and DBE (dimethyl nylon acid, a mixture including three dibasic esters, which is generally referred to as dimethyl nylon acid). Due to addition of the organic solvent, the conductive powder and the glass powder may be uniformly mixed, so that the density of the prepared porous heating body 1 may be ensured, and the conductive stability and structure uniformity of the porous heating body 1 may also be ensured.

It should be noted that, during heat generation, the heating body composition needs to be first roasted under a high temperature. Particle sizes and pores of the conductive powder and the glass powder are different, by controlling the real volume ratio of the glass powder to the conductive powder, the conductive powder may be in contact with each other and densely accumulated under the capillary wetting action of high-temperature melting of the glass powder, and the molten glass powder may be filled in the pores accumulated by the conductive powder. Therefore, the density of the porous heating body 1 prepared by using the heating body composition is improved. In a case that the prepared porous heating body 1 has a relatively high density, the e-liquid in the electronic cigarette atomization core 100 may not penetrate into pores of the heating body. In this way, cracking on the e-liquid by the porous heating body 1 in a heating state is avoided, and carbon deposition may not easily occur on the porous heating body 1. Therefore, when a user inhales an electronic cigarette, the e-liquid may be kept at a suitable atomization temperature, so that the atomization satiation of the e-liquid and the taste restoration of inhalation are improved.

If content of the glass powder in the heating body composition is too low, this is not conducive to the accumulation of the conductive powder. As a result, the pores of the porous heating body 1 prepared by using the heating body composition is excessively large, and the e-liquid in the electronic cigarette atomization core 100 may easily penetrate into the pores of the porous heating body 1. Certainly, the content of the glass powder in the heating body composition cannot be too high, and when the content of the glass powder is too high, content of the conductive powder is not enough. Since the conductivity of the glass powder is poor, a resistance value of the porous heating body 1 prepared by using the heating body composition is too high, and the electrical heating efficiency is reduced.

Although a heating body in a metal sheet shape has an advantage of a high density, the metal sheet can be hardly flush when attached to the surface of the porous ceramic base body. As a result, a protruding part of the metal sheet may be burnt and carbon deposition may occur during heat generation, and a service life of the metal sheet is reduced.

In the present disclosure, the slurry is arranged on the surface of the porous ceramic base body 2 in a printing or coating manner, and the printing includes screen printing or stencil printing. That is, the porous heating body 1 is obtained by sintering a screen printed heating body slurry, so that the conductive powder in the electronic cigarette atomization core 100 may be in contact with each other and densely accumulated under the capillary wetting action of high-temperature melting of the glass powder. In addition, the molten glass powder may be filled in the pores accumulated by the conductive powder, so that the density of the porous heating body 1 is improved, and the e-liquid in the electronic cigarette atomization core 100 is prevented from penetrating into the pores of the porous heating body 1.

In the present disclosure, to further improve the density of the porous heating body 1, in some implementations, an average particle size of the conductive powder ranges from 3 µm to 40 µm, and preferably, ranges from 5 µm to 20 µm. An average particle size of the glass powder ranges from 1 µm to 20 µm, and preferably, ranges from 3 µm to 15 µm. In addition, the average particle size of the conductive powder may be greater than the average particle size of the glass powder.

In some embodiments, the accumulation of the conductive powder may ensure the conductive stability of the heating body composition, and the glass powder may fill the gap between the conductive powder, so that the structure density of the porous heating body 1 prepared by using the heating body composition is ensured. A range of the average particle size of the conductive powder is directly related to the conductive stability of the heating body composition, when the range of the average particle size of the conductive powder is too small, a gap between conductive powder particles is too small, which is not conducive to flowing of the molten glass powder into the conductive powder particles, and consequently, a connection strength between the conductive powder particles is reduced. When the range of the average particle size of the conductive powder is too large, that is, the gap between the conductive powder particles is too large, more molten glass powder is required to bond the conductive powder particles, and consequently, the conductive efficiency of the heating body composition is reduced. In addition, for ease of flowing of the molten glass powder into the conductive powder particles, a particle size of a glass powder particle may be slightly smaller than a particle size of the conductive powder particle.

The present disclosure is further described below through specific embodiments and comparative embodiments.

The following embodiments all describe a process of preparing an electronic cigarette atomization core 100 including the porous heating body 1 by using the preparation method for the electronic cigarette atomization core 100 in the present disclosure.

### Embodiment 1

In the heating body composition, a real volume ratio of the glass powder to the conductive powder is 28:72, a mass ratio of the organic solvent to the powder is 45:55, the average particle size of the conductive powder is 3 µm, the average particle size of the glass powder is 1 µm, the conductive powder is nickel-chromium-iron alloy powder, where a mass ratio of nickel, chromium, and iron is 80:10:10, the glass powder is soda-lime silicate glass, and the organic solvent is terpineol.

A preparation method of the heating body: the conductive powder, the glass powder, and the organic solvent are mixed to prepare a heating body slurry, the heating body slurry covers the porous ceramic base body 2 through screen printing, and the screen printed heating body slurry is heated and sintered in an atmosphere furnace to obtain the porous heating body 1.

An atmosphere in the atmosphere furnace is mixed gas of H₂ and N₂ whose volume ratio is 1:1, a sintering temperature is 1030°C, and the sintering is performed for 15 min.

### Embodiment 2

The real volume ratio of the glass powder to the conductive powder is 39:61, and the remaining features are the same as those of Embodiment 1.

### Embodiment 3

The real volume ratio of the glass powder to the conductive powder is 50:50, and the remaining features are the same as those of Embodiment 1.

### Embodiment 4

The real volume ratio of the glass powder to the conductive powder is 60:40, and the remaining features are the same as those of Embodiment 1.

### Embodiment 5

The average particle size of the conductive powder is 5 µm, the average particle size of the glass powder is 3 µm, and the remaining features are the same as those of Embodiment 1.

### Embodiment 6

The average particle size of the conductive powder is 20 µm, the average particle size of the glass powder is 15 µm, and the remaining features are the same as those of Embodiment 1.

### Embodiment 7

The average particle size of the conductive powder is 40 µm, the average particle size of the glass powder is 20 µm, and the remaining features are the same as those of Embodiment 1.

### Embodiment 8

The average particle size of the conductive powder is 1 µm, the average particle size of the glass powder is 0.5 µm, and the remaining features are the same as those of Embodiment 1.

### Embodiment 9

The average particle size of the conductive powder is 50 µm, the average particle size of the glass powder is 30 µm, and the remaining features are the same as those of Embodiment 1.

### Embodiment 10

The average particle size of the conductive powder is 5 µm, the average particle size of the glass powder is 3 um, the atmosphere sintering temperature is 1060°C, and the remaining features are the same as those of Embodiment 1.

### Embodiment 11

The average particle size of the conductive powder is 5 µm, the average particle size of the glass powder is 3 µm, the atmosphere sintering temperature is 1090°C, and the remaining features are the same as those of Embodiment 1.

### Comparative Embodiment 1

The real volume ratio of the glass powder to the conductive powder is 20: 80, and the remaining features are the same as those of Embodiment 1.

### Comparative Embodiment 2

The atmosphere sintering temperature is 930°C, and the remaining features are the same as those of Embodiment 5.

### Performance Testing

The following tests are performed on the heating bodies obtained in the embodiments and the comparative embodiments:
Porosity test: The test is performed by using the Archimedes water displacement method.
A resistance value is measured by using a GB T 6146-2010 method.
An inhalation taste: The heating bodies are assembled into a cartridge accessory as cartridges, and inhaled and evaluated by a smoke taster.

The test results are shown in Table 1:

**Table 1**

| Group | Glass powder/ Conductive powder | Average particle size of conductive powder | Average particle size of glass powder | Roasting temperature | Porosity | Resistance value | Inhalation taste |
|---|---|---|---|---|---|---|---|
| Embodiment 1 | 28/72 | 3 µm | 1 µm | 1030°C | 10% | 1.0 Ω | No foreign flavor |
| Embodiment 2 | 39/61 | 3 µm | 1 µm | 1030°C | 8% | 1.1 Ω | No foreign flavor |
| Embodiment 3 | 50/50 | 3 µm | 1 µm | 1030°C | 3.2% | 1.3 Ω | No foreign flavor |
| Embodiment 4 | 60/40 | 3 µm | 1 µm | 1030°C | 2% | 1.5 Ω | No foreign flavor |
| Embodiment 5 | 28/72 | 5 µm | 3 µm | 1030°C | 2% | 1.0 Ω | No foreign flavor |
| Embodiment 6 | 28/72 | 20 µm | 15 µm | 1030°C | 7% | 1.2 Ω | No foreign flavor |
| Embodiment 7 | 28/72 | 40 µm | 20 µm | 1030°C | 8% | 1.3 Ω | No foreign flavor |
| Embodiment 8 | 28/72 | 1 µm | 0.5 µm | 1030°C | 11% | 1.5 Ω | No foreign flavor |
| Embodiment 9 | 28/72 | 50 µm | 30 µm | 1030°C | 12% | 1.7 Ω | No foreign flavor |
| Embodiment 10 | 28/72 | 5 µm | 3 µm | 1060°C | 1.6% | 0.95 Ω | No foreign flavor |
| Embodiment 11 | 28/72 | 5 µm | 3 µm | 1090°C | 1.1% | 0.9 Ω | No foreign flavor |
| Comparative Example 1 | 20/80 | 3 µm | 1 µm | 1030°C | 34% | 2.2 Ω | Burnt flavor |
| Comparative Example 2 | 28/72 | 5 µm | 3 µm | 930°C | 36% | 2.0 Ω | Burnt flavor |

As can be known from the test results in Table 1, by applying the heating body composition provided in the present disclosure to an electronic cigarette, a vapor taste of the electronic cigarette is good and does not have a burnt flavor, and in the comparative embodiments, a porous heating body in the existing technology is used, a porosity of the porous heating body is greater than 34%, a vapor taste is poor, and the heating body is easily burnt out.

According to a third aspect of the present disclosure, an electronic cigarette atomization core 100 is provided. The electronic cigarette atomization core is prepared by using the preparation method described in the foregoing embodiment. In the electronic cigarette atomization core 100 prepared by using the preparation method, components of a heating body composition are mixed and then screen printed onto a surface of a porous ceramic base body, and a screen printed heating body slurry is sintered, so that conductive powder in the heating body composition is in contact with each other and densely accumulated under a capillary wetting action of high-temperature melting of glass powder. In addition, the molten glass powder may be filled in the pores accumulated by the conductive powder, so that the density of the porous heating body 1 is improved, and the e-liquid in the electronic cigarette atomization core 100 is prevented from penetrating into the pores of the porous heating body 1.

The present disclosure further provides an electronic cigarette atomization assembly. In some implementations of the present disclosure, the electronic cigarette atomization assembly includes: a housing 101, a liquid storage tank 102 arranged in the housing 101, the electronic cigarette atomization core 100 of the present disclosure, and a lower cover 105, where one end of the housing 101 is provided with an air outlet channel 1011, and the other end of the housing 101 is an opening end. The lower cover 105 covers the opening end of the housing 101, and the lower cover 105 is provided with an air inlet channel. The liquid absorbing surface is in communication with the liquid storage tank, an atomization chamber 106 is formed between the atomization surface and a lower base, and the air inlet channel, the atomization chamber 106, and the air outlet channel 1011 are in air communication with each other.

In another implementation of the present disclosure, the electronic cigarette atomization assembly includes a housing 101, a liquid storage tank 102 arranged in the housing 101, the electronic cigarette atomization core 100 of the present disclosure, and a lower cover 105, where one end of the housing 101 is provided with an air outlet channel 1011, and the other end of the housing 101 is an opening end. The lower cover 105 covers the opening end of the housing 101, and the lower cover 105 is provided with an air inlet channel. The liquid absorbing surface is in communication with the liquid storage tank, an atomization chamber 106 is formed between the atomization surface and a lower base, and the air inlet channel, the atomization chamber 106, and the air outlet channel 1011 are in air communication with each other. The electronic cigarette atomization core further includes a first seal element 108, the first seal element 108 is sleeved on the porous ceramic base body 2, and the first seal element 108 at least covers a part of an outer peripheral surface of the porous ceramic base body 2 and an edge of the liquid absorbing surface to form a seal.

In another implementation of the present disclosure, the electronic cigarette atomization assembly includes a housing 101, a liquid storage tank 102 arranged in the housing 101, the electronic cigarette atomization core 100 of the present disclosure, and a lower cover 105, where one end of the housing 101 is provided with an air outlet channel 1011, and the other end of the housing 101 is an opening end. The lower cover 105 covers the opening end of the housing 101, and the lower cover 105 is provided with an air inlet channel. The liquid absorbing surface is in communication with the liquid storage tank, an atomization chamber 106 is formed between the atomization surface and a lower base, and the air inlet channel, the atomization chamber 106, and the air outlet channel 1011 are in air communication with each other. The electronic cigarette atomization assembly further includes a first seal element 108, the first seal element 108 is sleeved on the porous ceramic base body 2, and the first seal element 108 at least covers a part of an outer peripheral surface of the porous ceramic base body 2 and an edge of the liquid absorbing surface to form a seal. The electronic cigarette atomization assembly further includes: an upper support 103 and a second seal element 107. The upper support 103 cooperates with the lower cover 105 to form an accommodating cavity, the electronic cigarette atomization core 100 is located in the accommodating cavity and the electronic cigarette atomization core 100 is supported on the lower cover 105, the upper support 103 has a liquid guide hole 1032 and an air outlet hole 1031, the liquid absorbing surface of the porous ceramic base body 2 is in communication with the liquid storage tank 102 through the liquid guide hole 1032, and the atomization chamber 106 is in communication with the air outlet channel 1011 through the air outlet hole. The second seal element 107 is sleeved on a periphery of the upper support 103, an outer edge of the second seal element 107 abuts against an inner wall of the housing 101 to encircle and form the liquid storage tank 102, the second seal element 107 is provided with a first communication hole 1071 communicating the liquid storage tank 102 with the liquid guide hole 1032, and the second seal element 107 is provided with a second communication hole 1072 communicating the air outlet channel 1011 with the air outlet hole 1031.

In another implementation of the present disclosure, the electronic cigarette atomization assembly includes a housing 101, a liquid storage tank 102 arranged in the housing 101, the electronic cigarette atomization core 100 of the present disclosure, and a lower cover 105, where one end of the housing 101 is provided with an air outlet channel 1011, and the other end of the housing 101 is an opening end. The lower cover 105 covers the opening end of the housing 101, and the lower cover 105 is provided with an air inlet channel. The liquid absorbing surface is in communication with the liquid storage tank, an atomization chamber 106 is formed between the atomization surface and a lower base, and the air inlet channel, the atomization chamber 106, and the air outlet channel 1011 are in air communication with each other. The electronic cigarette atomization assembly further includes a first seal element 108, the first seal element 108 is sleeved on the porous ceramic base body 2, and the first seal element 108 at least covers a part of an outer peripheral surface of the porous ceramic base body 2 and an edge of the liquid absorbing surface to form a seal. The electronic cigarette atomization assembly further includes: an upper support 103 and a second seal element 107. The upper support 103 cooperates with the lower cover 105 to form an accommodating cavity, the electronic cigarette atomization core 100 is located in the accommodating cavity and the electronic cigarette atomization core 100 is supported on the lower cover 105, the upper support 103 is provided with a liquid guide hole 1032 and an air outlet hole 1031, the liquid absorbing surface of the porous ceramic base body 2 is in communication with the liquid storage tank 102 through the liquid guide hole 1032, and the atomization chamber 106 is in communication with the air outlet channel 1011 through the air outlet hole. The second seal element 107 is sleeved on a periphery of the upper support 103, an outer edge of the second seal element 107 abuts against an inner wall of the housing 101 to encircle and form the liquid storage tank 102, the second seal element 107 is provided with a first communication hole 1071 communicating the liquid storage tank 102 with the liquid guide hole 1032, and the second seal element 107 is provided with a second communication hole 1072 communicating the air outlet channel 1011 with the air outlet hole 1031. The electronic cigarette atomization assembly further includes a lower support 104, the upper support 103 cooperating with the lower support 104 to form the accommodating cavity, the electronic cigarette atomization core 100 is arranged in the accommodating cavity and the electronic cigarette atomization core 100 is supported on the lower support 104, the atomization chamber 106 is formed between the atomization surface of the porous ceramic base body 2 and the lower support 104, and the lower support 104 is provided with a vent hole in communication with an air inlet hole 1051.

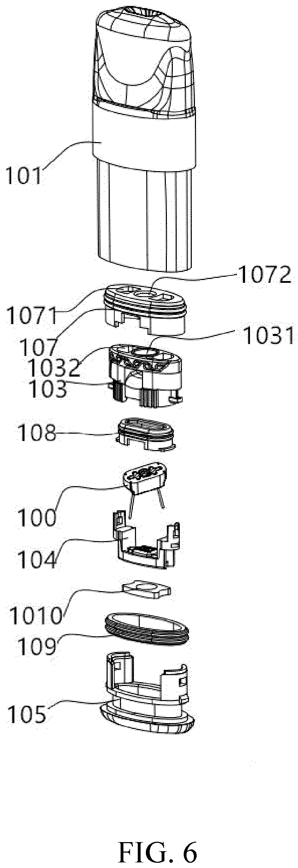

In still another embodiment of the present disclosure, as shown in FIG. 6 and FIG. 7, the electronic cigarette atomization assembly includes a housing 101, a liquid storage tank 102 arranged in the housing 101, and the electronic cigarette atomization core 100 described in the present disclosure, where one end of the housing 101 is provided with an air outlet channel 1011, and the other end of the housing 101 is an opening end. In some implementations, referring to FIG. 6 and FIG. 7, the electronic cigarette atomization assembly further includes a first seal element 108, the first seal element 108 is sleeved on the porous ceramic base body 2, and the first seal element 108 at least covers a part of an outer peripheral surface of the porous ceramic base body 2 and an edge of the liquid absorbing surface. The first seal element 108 is sleeved on a periphery of the atomization core 100, so that e-liquid on the liquid absorbing surface may be effectively sealed, and leakage of the e-liquid may be prevented.

In some implementations, as shown in FIG. 6 and FIG. 7, the electronic cigarette atomization assembly further includes an upper support 103, a lower support 104, and a lower cover 105, where the lower cover 105 covers the opening end of the housing 101. The lower cover 105 is provided with an air inlet hole 1051. The upper support 103 cooperates with the lower support 104 to form an accommodating cavity, and the electronic cigarette atomization core 100 is arranged in the accommodating cavity. The upper support 103 is provided with a liquid guide hole 1032 and an air outlet hole 1031, and the liquid absorbing surface of the porous ceramic base body 2 is in communication with the liquid storage tank 102 through the liquid guide hole 1032. An atomization chamber 106 is formed between the atomization surface of the porous ceramic base body 2 and the lower support 104, the lower support 104 is provided with a vent hole in communication with the air inlet hole 1051, the air outlet hole 1031 is respectively in communication with the atomization chamber 106 and the air outlet channel 1011, and external air may enter the atomization chamber 106 through the air inlet hole 1051 and the vent hole.

In some embodiments, during operation of the electronic cigarette atomization assembly, e-liquid flowing out of the liquid storage tank 102 is guided to the liquid absorbing surface of the porous ceramic base body 2 through the liquid guide hole 1032, and is absorbed to the porous heating body 1 on the atomization surface of the porous ceramic base body 2 through a capillary action of the porous ceramic base body 2, to form vapor after being heated and atomized by the porous heating body 1. In this case, a user inhales at an end opening of the air outlet channel 1011, air enters the atomization chamber 106 through the air inlet hole 1051 under an inhalation action of the user, and the air carries aerosols in the atomization chamber 106 to the air outlet channel 1011 for inhalation by the user.

In some embodiments of the present disclosure, referring to FIG. 6 and FIG. 7, the electronic cigarette atomization assembly further includes a second seal element 107 and a third seal element 109. The second seal element 107 is sleeved on a periphery of the upper support 103, an outer edge of the second seal element 107 abuts against an inner wall of the housing 101 to encircle and form the liquid storage tank 102, the second seal element 107 is provided with a first communication hole 1071 communicating the liquid storage tank 102 with the liquid guide hole 1032, and the second seal element 107 is provided with a second communication hole 1072 communicating the air outlet channel 1011 with the air outlet hole 1031.

The first seal element 108 is sleeved on a periphery of the electronic cigarette atomization core 100. The third seal element 109 is arranged surrounding a periphery of the lower cover 105, and an outer edge of the third seal element 109 abuts against the inner wall of the housing 101.

In some embodiments, the second seal element 107, the first seal element 108, and the third seal element 109 are configured to provide necessary sealing inside an electronic cigarette, to prevent unnecessary communication between the liquid storage tank 102 and a connection gap of each element, so that liquid leakage is effectively prevented. In addition, the electronic cigarette further includes a liquid absorbing element 1010, where the liquid absorbing element 1010 is arranged surrounding a periphery of the air inlet hole 1051, and the liquid absorbing element 1010 is configured to absorb condensate flowing out of the air inlet hole 1051.

The electronic cigarette atomization assembly provided in the present disclosure uses the porous heating body 1 provided in the foregoing embodiment, so that a case that the e-liquid in the electronic cigarette atomization core 100 penetrates into the porous heating body 1 and is cracked by the porous heating body is avoided In addition, when a user inhales an electronic cigarette, the e-liquid may be kept at a suitable atomization temperature, so that the atomization satiation of the e-liquid and the taste restoration of inhalation are improved.

The present disclosure further provides an electronic cigarette, including the electronic cigarette atomization assembly provided in the foregoing embodiment. The electronic cigarette atomization assembly in this embodiment of the present disclosure has the foregoing technical effects, so that the electronic cigarette according to this embodiment of the present disclosure may also have corresponding technical effects. That is, the electronic cigarette of the present disclosure may avoid a case that the e-liquid in the electronic cigarette atomization core 100 penetrates into the porous heating body 1 and is cracked by the porous heating body. In addition, when a user inhales an electronic cigarette, the e-liquid may be kept at a suitable atomization temperature, so that the atomization satiation of the e-liquid and the taste restoration of inhalation are improved.

Certainly, a person skilled in the art can understand and implement other structures and an operation principle of the electronic cigarette of the present disclosure, and details are not described again in the present disclosure.

Although some specific embodiments of the present disclosure have been described in detail through examples, a person skilled in the art should understand that the foregoing examples are merely used for description rather than limiting the scope of the present disclosure. A person skilled in the art should understand that, modifications may be made to the foregoing embodiments without departing from the scope defined by the appended claims.

## Claims

1. A preparation method for an electronic cigarette atomization core, comprising:
providing (S1) a porous ceramic base body;
mixing (S2) conductive powder and glass powder having a volume ratio of (28 to 60):(40 to 72) with an organic solvent to obtain a slurry; and
arranging (S3) the slurry on a surface of the porous ceramic base body to perform sintering, the sintering being performed under a hydrogen and/or nitrogen protection atmosphere or under a vacuum condition in which a vacuum degree is less than 1 Pa, and a sintering temperature ranging from 950°C to 1200°C,
wherein the sintering is performed under a mixed hydrogen and nitrogen atmosphere, and the sintering temperature ranges from 1030°C to 1200°C;
wherein the glass powder comprises 4% to 15% of Na₂O, 0% to 2% of MgO, 2% to 15% of Al₂O₃, 0% to 7% of K₂O, 0% to 15% of CaO, and 20% to 90% SiO₂; wherein the conductive powder comprises one or more of a nickel-chromium-iron alloy, a nickel-chromium alloy, nickel, silver, and palladium; and wherein the organic solvent comprises one or more of terpineol, diethylene glycol monobutyl ether, diethylene glycol monobutyl ether acetate, and DBE;
wherein a ratio of a mass sum of the conductive powder and the glass powder to a mass of the organic solvent is (40 to 90):(10 to 60); and
wherein the slurry is arranged on the surface of the porous ceramic base body in a printing or coating manner, and the printing comprising screen printing or stencil printing.

2. An electronic cigarette atomization core, the electronic cigarette atomization core being prepared by using the preparation method according to claim 1, wherein the electronic cigarette atomization core comprises:
the porous ceramic base body (2); and
a heating body formed by the sintered slurry,
wherein the porous ceramic base body (2) comprises a liquid absorbing surface and an atomization surface; and
wherein the heating body is arranged on the atomization surface, the heating body being a porous heating body (1), and wherein the porous heating body (1) has a porosity less than or equal to 30%.

3. The electronic cigarette atomization core according to claim 2, wherein the porosity of the porous heating body (1) is less than or equal to 10%.

4. The electronic cigarette atomization core according to claim 2 or 3, wherein the porosity of the porous heating body (1) is less than or equal to 3%.

5. The electronic cigarette atomization core according to any one of claims 2 to 4, wherein the porous heating body (1) has a pore size less than or equal to 10 µm.

6. The electronic cigarette atomization core according to claim 2 or 5, wherein the pore size of the porous heating body (1) is less than or equal to 2 µm.

7. The electronic cigarette atomization core according to any one of claims 2 to 6, wherein the porous heating body (1) is arranged on the atomization surface in a printing or coating manner, and the printing comprising screen printing or stencil printing.

8. The electronic cigarette atomization core according to claim 7, wherein the porous heating body (1) has a thickness ranging from 40 µm to 200 µm.

9. An electronic cigarette atomization assembly, comprising:
a housing (101), a liquid storage tank (102) arranged in the housing, the electronic cigarette atomization core (100) according to any one of claims 2 to 8, and a lower cover (105), one end of the housing being provided with an air outlet channel (1011), and another end of the housing being an opening end; the lower cover (105) covering the opening end of the housing, and the lower cover being provided with an air inlet channel; and the liquid absorbing surface being in communication with the liquid storage tank, an atomization chamber (106) being formed between the atomization surface and a lower base, and the air inlet channel, the atomization chamber, and the air outlet channel (1011) being in air communication with each other.

10. The electronic cigarette atomization assembly according to claim 9, further comprising a first seal element (108), the first seal element being sleeved on the porous ceramic base body (2), and the first seal element at least covering a part of an outer peripheral surface of the porous ceramic base body and an edge of the liquid absorbing surface to form a seal.

11. The electronic cigarette atomization assembly according to claim 10, further comprising: an upper support (103) and a second seal element (107); the upper support cooperating with the lower cover to form an accommodating cavity, the electronic cigarette atomization core being located in the accommodating cavity and the electronic cigarette atomization core being supported on the lower cover, the upper support (103) having a liquid guide hole (1032) and an air outlet hole (1031), the liquid absorbing surface of the porous ceramic base body being in communication with the liquid storage tank (102) through the liquid guide hole (1032), and the atomization chamber being in communication with the air outlet channel through the air outlet hole (1031); and the second seal element (107) being sleeved on a periphery of the upper support, an outer edge of the second seal element (107) abutting against an inner wall of the housing to encircle and form the liquid storage tank, the second seal element (107) having a first communication hole (1071) communicating the liquid storage tank with the liquid guide hole, and the second seal element having a second communication hole (1072) communicating the air outlet channel with the air outlet hole (1031).

12. The electronic cigarette atomization assembly according to claim 11, further comprising:
a lower support (104),
the upper support (103) cooperating with the lower support (104) to form the accommodating cavity, the electronic cigarette atomization core being arranged in the accommodating cavity, and the electronic cigarette atomization core being supported on the lower support (104), the atomization chamber being formed between the atomization surface of the porous ceramic base body (2) and the lower support (104), and the lower support having a vent hole in communication with an air inlet hole (1051).

13. The electronic cigarette atomization assembly according to claim 12, further comprising a third seal element (109), the third seal element being arranged surrounding a periphery of the lower cover (105), and an outer edge of the third seal element abutting against the inner wall of the housing.

14. An electronic cigarette, comprising the electronic cigarette atomization assembly according to any one of claims 9 to 13.

## Patentansprüche

1. Herstellungsverfahren eines Verdampfungskerns für eine elektronische Zigarette, umfassend:
Bereitstellen (S1) eines porösen Keramikgrundkörpers;
Mischen (S2) von leitfähigem Pulver und Glaspulver in einem Volumenverhältnis von (28 bis 60):(40 bis 72) mit einem organischen Lösungsmittel, um eine Aufschlämmung zu erhalten; und
Aufbringen (S3) der Aufschlämmung auf eine Oberfläche des porösen Keramikgrundkörpers, um das Sintern durchzuführen, wobei das Sintern unter einer Wasserstoff- und/oder Stickstoff-Schutzatmosphäre oder unter einer Vakuumbedingung, bei der ein Vakuumgrad weniger als 1 Pa beträgt, durchgeführt wird und eine Sintertemperatur im Bereich von 950 °C bis 1200 °C liegt,
wobei das Sintern unter einer Wasserstoff-Stickstoff-Mischatmosphäre durchgeführt wird und die Sintertemperatur im Bereich von 1030 °C bis 1200 °C liegt;
wobei das Glaspulver 4 % bis 15 % Na2O, 0 % bis 2 % MgO, 2 % bis 15 % Al2O3, 0 % bis 7 % K2O, 0 % bis 15 % CaO und 20 % bis 90 % SiO2 enthält; wobei das leitfähige Pulver eines oder mehrere, ausgewählt aus einer Nickel-Chrom-Eisen-Legierung, einer Nickel-Chrom-Legierung, Nickel, Silber und Palladium, umfasst; und wobei das organische Lösungsmittel eines oder mehrere, ausgewählt aus Terpineol, Diethylenglykolmonobutylether, Diethylenglykolmonobutyletheracetat und DBE, umfasst;
wobei ein Verhältnis der Summe der Massen des leitfähigen Pulvers und des Glaspulvers zur Masse des organischen Lösungsmittels (40 bis 90):(10 bis 60) beträgt; und
wobei die Aufschlämmung mittels Drucken oder Beschichten auf die Oberfläche des porösen Keramikgrundkörpers aufgebracht wird und das Drucken Siebdrucken oder Schablonendrucken umfasst.

2. Verdampfungskern für eine elektronische Zigarette, wobei der Verdampfungskern für eine elektronische Zigarette unter Verwendung des Herstellungsverfahrens nach Anspruch 1 hergestellt ist und der Verdampfungskern für eine elektronische Zigarette umfasst:
den porösen Keramikgrundkörper (2); und
einen durch die gesinterte Aufschlämmung gebildeten Heizkörper,
wobei der poröse Keramikgrundkörper (2) eine Flüssigkeitsabsorptionsfläche und eine Verdampfungsfläche umfasst; und
wobei der Heizkörper auf der Verdampfungsfläche angeordnet ist, der Heizkörper ein poröser Heizkörper (1) ist und der poröse Heizkörper (1) eine Porosität von höchstens 30 % aufweist.

3. Verdampfungskern für eine elektronische Zigarette nach Anspruch 2, wobei die Porosität des porösen Heizkörpers (1) höchstens 10 % beträgt.

4. Verdampfungskern für eine elektronische Zigarette nach Anspruch 2 oder 3, wobei die Porosität des porösen Heizkörpers (1) kleiner oder gleich 3 % ist.

5. Verdampfungskern für eine elektronische Zigarette nach einem der Ansprüche 2 bis 4, wobei der poröse Heizkörper (1) eine Porengröße kleiner oder gleich 10 µm aufweist.

6. Verdampfungskern für eine elektronische Zigarette nach Anspruch 2 oder 5, wobei die Porengröße des porösen Heizkörpers (1) kleiner oder gleich 2 µm ist.

7. Verdampfungskern für eine elektronische Zigarette nach einem der Ansprüche 2 bis 6, wobei der poröse Heizkörper (1) mittels Drucken oder Beschichten auf der Verdampfungsfläche angeordnet ist und das Drucken Siebdrucken oder Schablonendrucken umfasst.

8. Verdampfungskern für eine elektronische Zigarette nach Anspruch 7, wobei der poröse Heizkörper (1) eine Dicke im Bereich von 40 µm bis 200 µm aufweist.

9. Verdampfungsbaugruppe für eine elektronische Zigarette, umfassend:
ein Gehäuse (101), einen in dem Gehäuse angeordneten Flüssigkeitsspeicherbehälter (102), den Verdampfungskern (100) für eine elektronische Zigarette nach einem der Ansprüche 2 bis 8 und eine untere Abdeckung (105), wobei ein Ende des Gehäuses mit einem Luftauslasskanal (1011) versehen ist und ein anderes Ende des Gehäuses ein offenes Ende ist; wobei die untere Abdeckung (105) das offene Ende des Gehäuses abdeckt und die untere Abdeckung mit einem Lufteinlasskanal versehen ist; und wobei die Flüssigkeitsabsorptionsfläche mit dem Flüssigkeitsspeicherbehälter in Verbindung steht, zwischen der Verdampfungsfläche und einer unteren Basis eine Verdampfungskammer (106) ausgebildet ist und der Lufteinlasskanal, die Verdampfungskammer und der Luftauslasskanal (1011) luftleitend miteinander verbunden sind.

10. Verdampfungsbaugruppe für eine elektronische Zigarette nach Anspruch 9, ferner umfassend ein erstes Dichtungselement (108), wobei das erste Dichtungselement auf den porösen Keramikgrundkörper (2) aufgeschoben ist und das erste Dichtungselement zum Ausbilden einer Abdichtung zumindest einen Teil einer Außenumfangsfläche des porösen Keramikgrundkörpers und einen Rand der Flüssigkeitsabsorptionsfläche abdeckt.

11. Verdampfungsbaugruppe für eine elektronische Zigarette nach Anspruch 10, ferner umfassend: einen oberen Träger (103) und ein zweites Dichtungselement (107); wobei der obere Träger mit der unteren Abdeckung zusammenwirkt, wodurch der Flüssigkeitsspeicherbehälter umschlossen und ausgebildet wird, der Verdampfungskern für eine elektronische Zigarette in der Aufnahmekammer angeordnet ist und auf der unteren Abdeckung abgestützt ist, der obere Träger (103) eine Flüssigkeitsführungsöffnung (1032) und eine Luftauslassöffnung (1031) aufweist, die Flüssigkeitsabsorptionsfläche des porösen Keramikgrundkörpers über die Flüssigkeitsführungsöffnung (1032) mit dem Flüssigkeitsspeicherbehälter (102) in Verbindung steht und die Verdampfungskammer über die Luftauslassöffnung (1031) mit dem Luftauslasskanal in Verbindung steht; und wobei das zweite Dichtungselement (107) auf einen Außenumfang des oberen Trägers aufgeschoben ist, ein Außenrand des zweiten Dichtungselements (107) an einer Innenwand des Gehäuses anliegt, um den Flüssigkeitsspeicherbehälter zu umschließen und auszubilden, das zweite Dichtungselement (107) eine erste Verbindungsöffnung (1071), die den Flüssigkeitsspeicherbehälter mit der Flüssigkeitsführungsöffnung verbindet, und eine zweite Verbindungsöffnung (1072), die den Luftauslasskanal mit der Luftauslassöffnung (1031) verbindet, aufweist.

12. Verdampfungsbaugruppe für eine elektronische Zigarette nach Anspruch 11, ferner umfassend:
einen unteren Träger (104),
wobei der obere Träger (103) mit dem unteren Träger (104) zusammenwirkt, um die Aufnahmekammer auszubilden, der Verdampfungskern für eine elektronische Zigarette in der Aufnahmekammer angeordnet ist und auf dem unteren Träger (104) abgestützt ist, die Verdampfungskammer zwischen der Verdampfungsfläche des porösen Keramikgrundkörpers (2) und dem unteren Träger (104) ausgebildet ist und der untere Träger eine Lüftungsöffnung aufweist, die mit einer Lufteinlassöffnung (1051) in Verbindung steht.

13. Verdampfungsbaugruppe für eine elektronische Zigarette nach Anspruch 12, ferner umfassend ein drittes Dichtungselement (109), wobei das dritte Dichtungselement um einen Umfang der unteren Abdeckung (105) herum angeordnet ist und ein Außenrand des dritten Dichtungselements an der Innenwand des Gehäuses anliegt.

14. Elektronische Zigarette, umfassend die Verdampfungsbaugruppe für eine elektronische Zigarette nach einem der Ansprüche 9 bis 13.

## Revendications

1. Un procédé de préparation pour un cœur d'atomisation de cigarette électronique, comprenant :
la fourniture (S1) d'un corps de base en céramique poreuse ;
le mélange (S2) de poudre conductrice et de poudre de verre ayant un rapport volumique de (28 à 60):(40 à 72) avec un solvant organique pour obtenir une suspension ; et
l'agencement (S3) de la suspension sur une surface du corps de base en céramique poreuse pour effectuer un frittage, le frittage étant effectué sous une atmosphère de protection d'hydrogène et/ou d'azote ou sous une condition de vide dans laquelle un degré de vide est inférieur à 1 Pa, et une température de frittage allant de 950 °C à 1200 °C,
dans lequel le frittage est effectué sous une atmosphère mixte d'hydrogène et d'azote, et la température de frittage va de 1030 °C à 1200 °C ;
dans lequel la poudre de verre comprend 4 % à 15 % de Na₂O, 0 % à 2 % de MgO, 2 % à 15 % d'Al₂O₃, 0 % à 7 % de K₂O, 0 % à 15 % de CaO, et 20 % à 90 % de SiO₂ ; et dans lequel la poudre conductrice comprend un ou plusieurs parmi un alliage nickel-chrome-fer, un alliage nickel-chrome, le nickel, l'argent et le palladium ; et dans lequel le solvant organique comprend un ou plusieurs parmi le terpinéol, l'éther monobutylique de diéthylène glycol, l'acétate d'éther monobutylique de diéthylène glycol et le DBE ;
dans lequel un rapport d'une somme des masses de la poudre conductrice et de la poudre de verre à une masse du solvant organique est de (40 à 90):(10 à 60) ; et
dans lequel la suspension est agencée sur la surface du corps de base en céramique poreuse par impression ou revêtement, et l'impression comprenant la sérigraphie ou l'impression au pochoir.

2. Un cœur d'atomisation de cigarette électronique, le cœur d'atomisation de cigarette électronique étant préparé en utilisant le procédé de préparation selon la revendication 1, dans lequel le cœur d'atomisation de cigarette électronique comprend :
le corps de base en céramique poreuse (2) ; et
un corps chauffant formé par la suspension frittée,
dans lequel le corps de base en céramique poreuse (2) comprend une surface d'absorption de liquide et une surface d'atomisation ; et
dans lequel le corps chauffant est agencé sur la surface d'atomisation, le corps chauffant étant un corps chauffant poreux (1), et dans lequel le corps chauffant poreux (1) a une porosité inférieure ou égale à 30 %.

3. Le cœur d'atomisation de cigarette électronique selon la revendication 2, dans lequel la porosité du corps chauffant poreux (1) est inférieure ou égale à 10 %.

4. Le cœur d'atomisation de cigarette électronique selon la revendication 2 ou 3, dans lequel la porosité du corps chauffant poreux (1) est inférieure ou égale à 3 %.

5. Le cœur d'atomisation de cigarette électronique selon l'une quelconque des revendications 2 à 4, dans lequel le corps chauffant poreux (1) a une taille de pore inférieure ou égale à 10 µm.

6. Le cœur d'atomisation de cigarette électronique selon la revendication 2 ou 5, dans lequel la taille de pore du corps chauffant poreux (1) est inférieure ou égale à 2 µm.

7. Le cœur d'atomisation de cigarette électronique selon l'une quelconque des revendications 2 à 6, dans lequel le corps chauffant poreux (1) est agencé sur la surface d'atomisation par impression ou revêtement, et l'impression comprenant la sérigraphie ou l'impression au pochoir.

8. Le cœur d'atomisation de cigarette électronique selon la revendication 7, dans lequel le corps chauffant poreux (1) a une épaisseur allant de 40 µm à 200 µm.

9. Un ensemble d'atomisation de cigarette électronique, comprenant :
un boîtier (101), un réservoir de stockage de liquide (102) agencé dans le boîtier, le cœur d'atomisation de cigarette électronique (100) selon l'une quelconque des revendications 2 à 8, et un couvercle inférieur (105), une extrémité du boîtier étant pourvue d'un canal de sortie d'air (1011), et une autre extrémité du boîtier étant une extrémité d'ouverture ; le couvercle inférieur (105) recouvrant l'extrémité d'ouverture du boîtier, et le couvercle inférieur étant pourvu d'un canal d'entrée d'air ; et la surface d'absorption de liquide étant en communication avec le réservoir de stockage de liquide, une chambre d'atomisation (106) étant formée entre la surface d'atomisation et une base inférieure, et le canal d'entrée d'air, la chambre d'atomisation et le canal de sortie d'air (1011) étant en communication d'air les uns avec les autres.

10. L'ensemble d'atomisation de cigarette électronique selon la revendication 9, comprenant en outre un premier élément d'étanchéité (108), le premier élément d'étanchéité étant emmanché sur le corps de base en céramique poreuse (2), et le premier élément d'étanchéité recouvrant au moins une partie d'une surface périphérique extérieure du corps de base en céramique poreuse et un bord de la surface d'absorption de liquide pour former une étanchéité.

11. L'ensemble d'atomisation de cigarette électronique selon la revendication 10, comprenant en outre : un support supérieur (103) et un deuxième élément d'étanchéité (107) ; le support supérieur coopérant avec le couvercle inférieur pour former une cavité de réception, le cœur d'atomisation de cigarette électronique étant situé dans la cavité de réception et le cœur d'atomisation de cigarette électronique étant supporté sur le couvercle inférieur, le support supérieur (103) ayant un trou de guidage de liquide (1032) et un trou de sortie d'air (1031), la surface d'absorption de liquide du corps de base en céramique poreuse étant en communication avec le réservoir de stockage de liquide (102) à travers le trou de guidage de liquide (1032), et la chambre d'atomisation étant en communication avec le canal de sortie d'air à travers le trou de sortie d'air (1031) ; et le deuxième élément d'étanchéité (107) étant emmanché sur une périphérie du support supérieur, un bord extérieur du deuxième élément d'étanchéité (107) venant en butée contre une paroi interne du boîtier pour encercler et former le réservoir de stockage de liquide, le deuxième élément d'étanchéité (107) ayant un premier trou de communication (1071) faisant communiquer le réservoir de stockage de liquide avec le trou de guidage de liquide, et le deuxième élément d'étanchéité ayant un deuxième trou de communication (1072) faisant communiquer le canal de sortie d'air avec le trou de sortie d'air (1031).

12. L'ensemble d'atomisation de cigarette électronique selon la revendication 11, comprenant en outre :
un support inférieur (104),
le support supérieur (103) coopérant avec le support inférieur (104) pour former la cavité de réception, le cœur d'atomisation de cigarette électronique étant agencé dans la cavité de réception, et le cœur d'atomisation de cigarette électronique étant supporté sur le support inférieur (104), la chambre d'atomisation étant formée entre la surface d'atomisation du corps de base en céramique poreuse (2) et le support inférieur (104), et le support inférieur ayant un trou de ventilation en communication avec un trou d'entrée d'air (1051).

13. L'ensemble d'atomisation de cigarette électronique selon la revendication 12, comprenant en outre un troisième élément d'étanchéité (109), le troisième élément d'étanchéité étant agencé en entourant une périphérie du couvercle inférieur (105), et un bord extérieur du troisième élément d'étanchéité venant en butée contre la paroi interne du boîtier.

14. Une cigarette électronique, comprenant l'ensemble d'atomisation de cigarette électronique selon l'une quelconque des revendications 9 à 13.
